# FASCICULE DE BREVET EUROPEEN

(11) **EP 3 324 802 B1**
(45) Date de publication et mention de la délivrance du brevet: **19.06.2019**
(21) Numéro de dépôt: 16745802.5
(22) Date de dépôt: 13.07.2016
(51) Int. Cl.: A47J 43/06, A47J 43/25, A47J 43/08

(54) **DISPOSITIF DE PRÉPARATION CULINAIRE COMPORTANT AU MOINS UN OUTIL DE COUPE EN SPIRALE ROTATIF**
LEBENSMITTELZUBEREITUNGSVORRICHTUNG MIT MINDESTENS EINEM ROTIERENDEN SPIRALSCHNEIDWERKZEUG
FOOD PREPARATION DEVICE HAVING AT LEAST ONE ROTARY SPIRAL CUTTING TOOL

(30) Priorité: 20.07.2015 FR 1556866
(43) Date de publication de la demande: 30.05.2018
(73) Titulaire: SEB S.A., 69130 Ecully (FR)
(72) Inventeur: BOURGEOIS-JACQUET, Jean-Marie, 21800 Sennecey-les-Dijon (FR); ROSSI, Fabrice, 65290 Juillan (FR); DAVID, Laurent, 65360 Vielle Adour (FR)
(74) Mandataire: Bourrières, Patrice
(86) Numéro de dépôt international: PCT/FR2016/051819
(87) Numéro de publication internationale: WO 2017/013337

(56) Documents cités:
- WO-A2-2010/106284
- DE-A1- 2 809 416

## Description

La présente invention concerne le domaine technique des dispositifs de préparation culinaire comportant au moins un outil de coupe en spirale rotatif.

La présente invention concerne plus particulièrement, mais non exclusivement, les appareils électroménagers de préparation culinaire comportant un boîtier motorisé portant un accessoire amovible formant un dispositif de préparation culinaire du type précité. La présente invention concerne également les accessoires amovibles du type précité.

Le document WO 2010/106284 divulgue un dispositif de préparation culinaire avec découpe de type "taille crayon" des aliments par un outil de coupe conique ou avec découpe de type râpés ou émincés par un outil de coupe disque. Toutefois ce dispositif de préparation culinaire nécessite un entraînement particulier pour pouvoir entraîner l'outil de coupe conique ; l'utilisation de deux types d'outil de coupe très différents (un outil de forme conique et un outil en forme de disque) nécessite la présence d'une goulotte mobile, ce qui complique encore la construction du dispositif de préparation culinaire.

Un but de la présente invention est de répondre aux inconvénients des documents de l'art antérieur mentionnés ci-dessus et en particulier, tout d'abord, de proposer un dispositif de préparation culinaire qui offre la possibilité de couper en spirale des aliments à préparer, notamment pour obtenir une découpe de type "taille crayon", tout en présentant une structure simplifiée.

Pour cela un premier aspect de l'invention concerne un dispositif de préparation culinaire comprenant :
- au moins un outil de coupe en spirale,
- un corps agencé pour recevoir ledit au moins un outil de coupe de manière amovible dans un espace de travail ménagé dans ledit corps,
- un entraîneur, mobile en rotation autour d'un premier axe de rotation, du fait que le dispositif de préparation culinaire comprend au moins une portion d'entraîneur entraînée par l'entraîneur et agencée pour s'engrener avec ledit au moins un outil de coupe, afin d'entraîner en rotation ledit au moins un outil de coupe selon un deuxième axe de rotation, incliné par rapport au premier axe de rotation.

Selon la présente mise en oeuvre, ledit au moins un outil de coupe en spirale est reçu de manière amovible par le dispositif de préparation culinaire pour découper les aliments en longs rubans. A cet effet, l'invention propose d'implanter une interface de transmission, par exemple de type engrenage, pour permettre d'entraîner en rotation ledit au moins un outil de coupe selon un axe de rotation différent de celui de la portion d'entraîneur. La structure est donc simplifiée pour entraîner l'outil de coupe. De plus l'entraîneur prévu par l'invention peut servir à entraîner un autre outil de coupe en rotation autour du premier axe de rotation, ce qui permet de réutiliser d'autres outils de coupe que ceux prévus pour faire de la coupe en spirale.

Avantageusement, l'axe de rotation de l'entraîneur et l'axe de rotation dudit au moins un outil de coupe sont coplanaires. Le rendement mécanique est optimal.

Avantageusement, l'axe de rotation dudit au moins un outil de coupe est orienté à 90° ± 45° par rapport à l'axe de rotation de l'entraîneur.

Avantageusement, ledit au moins un outil de coupe en spirale comprend une paroi d'appui s'étendant autour du deuxième axe de rotation et comporte au moins une lame de coupe s'étendant jusqu'au deuxième axe de rotation, avec un passage adjacent à ladite au moins une lame de coupe, ledit passage s'étendant jusqu'au deuxième axe de rotation, pour permettre l'évacuation des spirales d'aliments découpés. Ladite au moins une lame de coupe peut être droite, mais aussi ondulée. Si désiré, au moins une lame de coupe additionnelle peut s'étendre en amont ou en aval dudit passage, pour préfendre les aliments avant leur découpe par ladite au moins une lame de coupe ou pour refendre les aliments après leur découpe par ladite au moins une lame de coupe, et obtenir ainsi des lamelles ou des filaments. Si désiré ledit au moins un outil de coupe en spirale peut comporter plusieurs lames de coupe. En alternative ou en complément, ledit au moins un outil de coupe en spirale peut comporter au moins une lame de coupe prévue à la fois pour découper et pour fendre l'aliment. En alternative ou en complément, le deuxième axe de rotation peut être formé par un organe de centrage, sur lequel est piqué l'aliment à découper. Ladite au moins une lame de coupe et le passage adjacent s'étendent alors jusqu'à l'organe de centrage.

Selon une forme de réalisation avantageuse, la paroi d'appui est conique et ladite au moins une lame de coupe s'étend à l'intérieur de la paroi d'appui conique. Une telle réalisation permet de centrer l'aliment à découper, pour réaliser une découpe de type "taille crayon".

Avantageusement, le corps comprend une goulotte d'alimentation agencée pour recevoir des aliments à préparer et les guider vers l'espace de travail, le dispositif de préparation culinaire étant agencé pour recevoir ledit au moins un outil de coupe dans l'espace de travail avec la goulotte d'alimentation débouchant en regard de la paroi d'appui. Autrement dit, les aliments à préparer sont dirigés de manière sécurisée sur la paroi d'appui dudit au moins un outil de coupe.

Avantageusement, ledit au moins un outil de coupe comprend une couronne périphérique agencée autour de la paroi d'appui, pour s'engrener avec ladite au moins une portion d'entraîneur.

Avantageusement, la paroi d'appui dudit au moins un outil de coupe est réalisée en matière plastique et ladite au moins une lame de coupe est rapportée sur la paroi d'appui.

Avantageusement, le dispositif de préparation culinaire comprend un poussoir agencé pour s'insérer dans la goulotte d'alimentation et pousser ainsi les aliments à préparer vers l'espace de travail, le poussoir comprenant des moyens de blocage agencés pour bloquer en rotation les aliments dans la goulotte d'alimentation. La coupe des aliments est efficace avec le blocage en rotation pour empêcher les aliments de tourner sur eux-mêmes dans la goulotte d'alimentation.

Avantageusement, les moyens de blocage sont des piques, qui peuvent s'insérer efficacement dans les aliments.

Avantageusement, ladite au moins une portion d'entraîneur comprend une interface d'entraînement du type pignon conique, de préférence à axes concourants. L'invention ne nécessite pas forcément d'avoir les deux axes de rotation dans le même plan, mais cette caractéristique forme une mise en oeuvre préférée, avec un rendement mécanique optimal.

Avantageusement, le corps est agencé pour recevoir dans l'espace de travail et de manière amovible au moins un autre outil de coupe à la place dudit au moins un outil de coupe, l'entraîneur étant agencé pour s'engager avec ledit au moins un autre outil de coupe afin de l'entrainer en rotation selon le premier axe de rotation. Selon la présente mise en oeuvre, ledit au moins un autre outil de coupe est un outil destiné à couper les aliments en tranches, rondelles : les aliments sont poussés vers une paroi latérale dudit au moins un autre outil de coupe. Ledit au moins un autre outil de coupe peut notamment être tronconique (c'est-à-dire que le cône de base de cet outil a sa partie supérieure coupée par un plan) ou cylindrique. Selon cette mise en oeuvre, le dispositif de préparation culinaire peut avantageusement être utilisé pour deux découpes différentes : une découpe en spirale avec ledit au moins un outil de coupe, et une découpe en tranches ou pour râper les aliments avec ledit au moins un autre outil de coupe.

Avantageusement, ladite au moins une portion d'entraîneur est agencée pour s'accoupler avec ledit au moins un autre outil de coupe et l'entraîner en rotation à une vitesse de rotation identique à la vitesse de rotation de l'entraîneur. En d'autres termes, l'entraîneur et l'autre outil de coupe ont le même axe de rotation et tournent à la même vitesse.

Avantageusement, l'entraîneur comporte une interface centrale agencée pour s'accoupler avec ledit au moins un autre outil de coupe et l'entraîner en rotation autour du premier axe de rotation à une vitesse de rotation identique à la vitesse de rotation de l'entraîneur. Selon cette mise en oeuvre, le dispositif de préparation culinaire comprend deux interfaces d'entraînement distinctes agencées pour coopérer soit avec ledit au moins un outil de coupe, soit avec ledit au moins un autre outil de coupe. Si une interface d'entraînement spécifique est nécessaire pour ledit au moins un outil de coupe, l'autre interface d'entraînement peut être conçue pour utiliser des autres outils de coupe existants. On peut envisager d'avoir des interfaces de type pignons en hélice, pour retenir naturellement dans l'espace de travail les outils de coupe lorsqu'ils sont entraînés en rotation.

Avantageusement, ledit au moins un autre outil de coupe comprend une paroi latérale tronconique ou cylindrique avec au moins une interface de coupe, le corps étant agencé pour recevoir ledit au moins un autre outil de coupe dans l'espace de travail avec la goulotte d'alimentation débouchant en regard de la paroi latérale tronconique ou cylindrique.

Avantageusement, le corps comprend un volet agencé pour pivoter entre :
- une position fermée dans laquelle le volet recouvre au moins une portion de la paroi latérale tronconique ou cylindrique dudit au moins un autre outil de coupe,
- une position ouverte, dans laquelle le volet est agencé pour permettre à des aliments coupés par ledit au moins un outil de coupe de tomber directement dans un réceptacle.

Avantageusement, ladite au moins une portion d'entraîneur est de type pignon conique pour coopérer avec une interface périphérique dudit au moins un outil de coupe.

Avantageusement, le dispositif de préparation culinaire comprend des moyens de retenue dudit au moins un outil de coupe entraîné par ladite au moins une portion d'entraîneur.

Avantageusement, les moyens de retenue comprennent au moins une portion de couronne formant une butée pour recevoir ledit au moins un outil de coupe entraîné par ladite au moins une portion d'entraîneur.

Avantageusement, les moyens de retenue comprennent une bague amovible par rapport au corps et agencée pour former au moins une butée mécanique audit au moins un outil de coupe pour le retenir selon la direction du deuxième axe de rotation.

Avantageusement, les moyens de retenue comprennent un support amovible par rapport au corps et agencé pour former au moins une butée mécanique audit au moins un outil de coupe pour le retenir selon la direction du deuxième axe de rotation.

Avantageusement, le support amovible comprend un palier et reçoit ladite au moins une portion d'entraîneur montée en pivot dans le palier. L'outil de coupe est alors porté par le support à la fois directement et par l'intermédiaire de ladite au moins une portion d'entraîneur.

Avantageusement, ladite au moins une butée formée par le support amovible est agencée pour recevoir ledit au moins un outil de coupe. En particulier, la butée mécanique peut avoir la forme d'une couronne sur laquelle ledit au moins un outil de coupe peut reposer pour pivoter en rotation autour du deuxième axe de rotation.

Avantageusement, les moyens de retenue comprennent un tiroir amovible par rapport au corps et agencé pour former au moins une butée mécanique audit au moins un outil de coupe pour le retenir selon la direction du deuxième axe de rotation.

Avantageusement, le corps est agencé pour s'accoupler de manière amovible à une base motorisée pour former un appareil de préparation culinaire,
le corps comprenant :
- un palier,
- l'entraîneur monté en pivot dans le palier,
et l'entraîneur est agencé pour s'accoupler avec une sortie d'entraînement de la base motorisée.

Avantageusement, le dispositif de préparation culinaire comprend :
- au moins un outil de coupe en spirale, amovible par rapport au corps,
- au moins un autre outil de coupe tronconique ou cylindrique, amovible par rapport au corps.

Un second aspect de l'invention concerne un appareil de préparation culinaire comprenant une base motorisée et un accessoire de travail solidaire de la base motorisée, l'accessoire de travail formant un dispositif de préparation culinaire selon le premier aspect.

D'autres caractéristiques et avantages de la présente invention apparaîtront plus clairement à la lecture de la description détaillée qui suit de trois modes de réalisation de l'invention et de variantes, donnés à titre d'exemples nullement limitatifs et illustrés par les dessins annexés, dans lesquels :
- la figure 1 représente un appareil de préparation culinaire avec un dispositif de préparation culinaire selon l'invention ;
- la figure 2 représente une vue en coupe d'un premier mode de réalisation d'un dispositif de préparation culinaire selon l'invention recevant un outil de coupe en spirale amovible ;
- la figure 3 représente la vue en coupe du dispositif de préparation culinaire de la figure 2 recevant un autre outil de coupe tronconique amovible ;
- la figure 4 représente un deuxième mode de réalisation d'un dispositif de préparation culinaire selon l'invention recevant le type d'outil de coupe en spirale amovible de la figure 2 ;
- la figure 5 représente le dispositif de préparation culinaire de la figure 4 avec un volet d'un corps du dispositif de préparation culinaire en position ouverte ;
- la figure 6 représente une vue en coupe d'une variante de réalisation d'un corps faisant partie du dispositif de préparation culinaire de la figure 2 ;
- la figure 7 représente un troisième mode de réalisation d'un dispositif de préparation culinaire selon l'invention recevant le type d'outil de coupe en spirale amovible de la figure 2 ;
- la figure 8 représente une vue détaillée d'un entraîneur de la figure 7 ;
- la figure 9 représente une vue détaillée d'un outil de coupe en spirale de la figure 7 ;
- la figure 10 représente une vue détaillée d'un tiroir amovible de la figure 7 ;
- la figure 11 représente une vue détaillée d'un corps de la figure 7 ;
- la figure 12 représente une vue détaillée d'un autre outil de coupe tronconique pouvant être reçu par l'un des dispositifs de préparation culinaire de la figure 2 ou 3 ou 4 ou 5 ou 7.

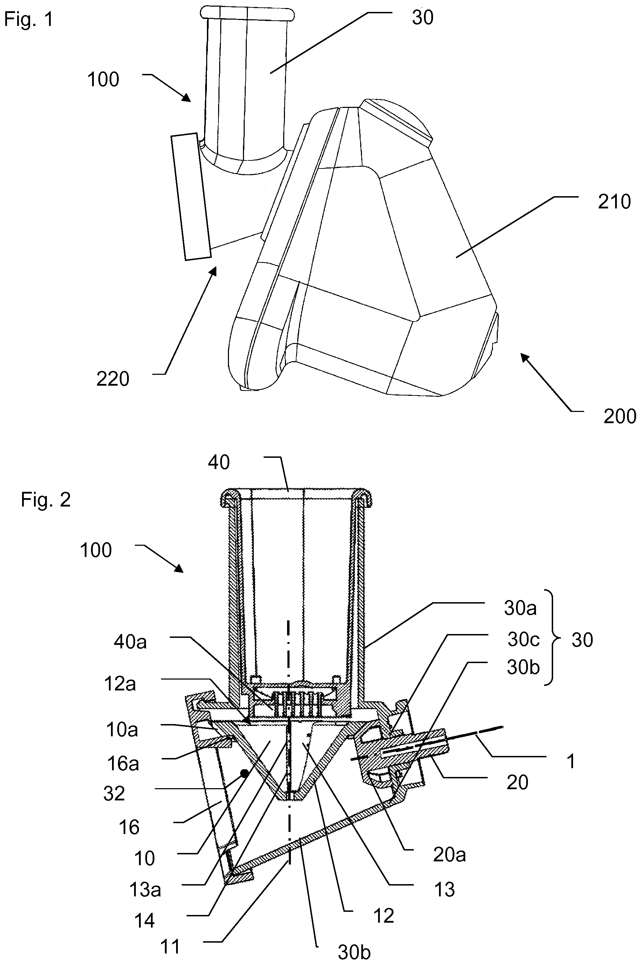

La figure 1 représente un appareil de préparation culinaire 200 comprenant une base motorisée 210 et un accessoire de travail 220 solidaire de la base motorisée 210. L'accessoire de travail 220 forme un dispositif de préparation culinaire 100 selon l'invention. L'accessoire de travail 220 est avantageusement amovible par rapport à la base motorisée 210.

Sur la figure 1, seul un corps 30 faisant partie du dispositif de préparation culinaire 100 est visible. Comme cela sera expliqué ci-dessous, ce corps 30 est amovible par rapport à la base motorisée 210 et agencé pour définir un espace de travail dans lequel un outil de coupe peut être reçu, afin d'être entraîné en rotation par la base motorisée 210, pour couper des aliments à préparer.

La figure 2 représente une vue en coupe d'une première mise en oeuvre d'un dispositif de préparation culinaire 100 selon l'invention. Le corps 30 définit un espace de travail 32 dans lequel est reçu de manière amovible un outil de coupe 10 en spirale. L'outil de coupe 10 est rotatif.

Le corps 30 comprend une goulotte d'alimentation 30a agencée pour recevoir les aliments à préparer et les guider vers l'espace de travail 32. Pour garantir toute la sécurité nécessaire, un poussoir 40 est prévu pour pouvoir coulisser dans la goulotte d'alimentation 30a et pousser ainsi les aliments sans risque de contact entre les doigts de l'utilisateur et l'outil de coupe 10.

Le corps 30 comprend également un conduit d'éjection 30b, agencé pour recevoir les aliments découpés en sortie de l'espace de travail 32, et les laisser tomber par gravité dans un réceptacle.

Pour être entraîné en rotation, l'outil de coupe 10 est engagé avec un entraîneur 20, lui-même accouplé à une sortie d'entraînement de la base motorisée 210, non représentée. L'entraîneur 20 est monté dans un palier 30c du corps 30 et il est mobile en rotation autour d'un premier axe de rotation 1, et comprend une portion d'entraîneur 20a qui est un pignon conique, agencé pour s'engrener avec l'outil de coupe 10, via une interface périphérique 10a qui est une roue dentée conique. En conséquence, l'outil de coupe 10 est entraîné en rotation selon un deuxième axe de rotation 11 différent du premier axe de rotation 1 de l'entraîneur 20.

Tel que bien visible sur la figure 2, la goulotte d'alimentation 30a s'étend autour du deuxième axe de rotation 11 lorsque l'outil de coupe 10 en spirale est en place dans le corps 30.

Tel que visible sur la figure 2, l'outil de coupe 10 en spirale comprend une paroi d'appui 12 s'étendant autour du deuxième axe de rotation 11. L'outil de coupe 10 en spirale comporte au moins une lame de coupe 13 s'étendant jusqu'au deuxième axe de rotation 11, avec un passage 14 adjacent à ladite lame de coupe 13. Le passage 14 s'étend jusqu'au deuxième axe de rotation 11 pour permettre l'évacuation des spirales d'aliments découpés.

Plus particulièrement dans l'exemple de réalisation illustré sur la figure 2, la paroi d'appui 12 est conique et ladite au moins une lame de coupe 13 s'étend à l'intérieur de la paroi d'appui 12 conique. La paroi d'appui 12 conique définit une ouverture d'alimentation 12a. Comme on le voit sur la figure 2, la goulotte d'alimentation 30a débouche en regard de la paroi d'appui 12. Ainsi l'ouverture d'alimentation 12a de l'outil de coupe 10 conique s'étend en regard de la goulotte d'alimentation 30a, pour recevoir les aliments et les découper, comme par exemple un taille crayon le ferait avec un crayon de papier. Il en résulte que les aliments longs, comme des carottes ou des concombres, sont découpés en longues bandes continues, et forment alors des rubans pouvant ressembler à des pâtes telles que les tagliatelles.

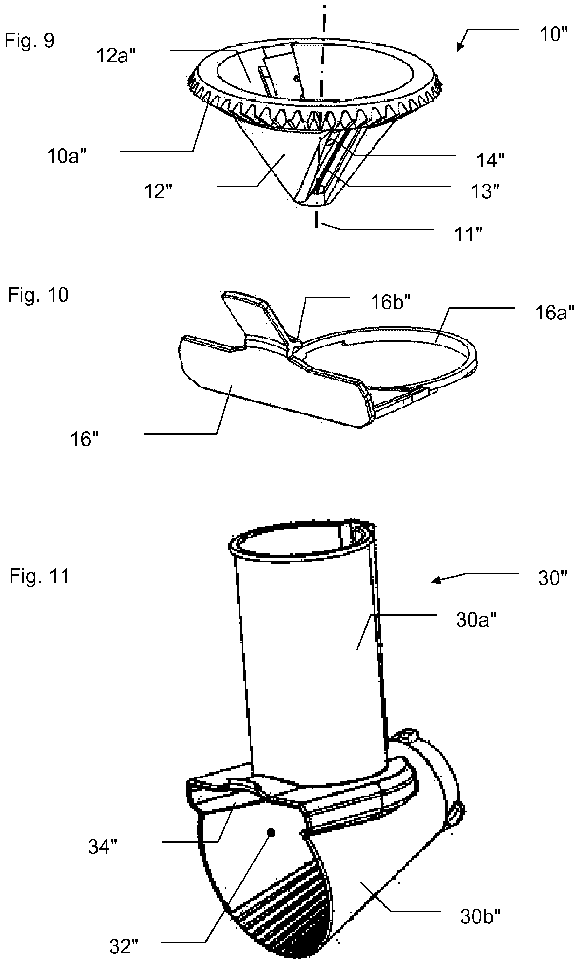

Pour permettre de faire une telle découpe, la lame de coupe 13 est inclinée par rapport au deuxième axe de rotation 11, et s'étend jusqu'au deuxième axe de rotation 11 de l'outil de coupe 10. Le passage 14 est adjacent à un bord de coupe 13a de la lame de coupe 13. La lame de coupe 13 peut être droite, mais aussi ondulée. Une description détaillée de ce type d'outil de coupe 10 est effectuée lors de la description de la figure 9.

Lors de la découpe des aliments avec l'outil de coupe 10, un couple de rotation est appliqué par l'outil de coupe 10 sur les aliments introduits dans la goulotte d'alimentation 30a. Pour opérer une découpe efficace, le poussoir 40 est équipé en partie inférieure de moyens de blocage agencés pour bloquer en rotation les aliments dans la goulotte d'alimentation 30a. Ces moyens de blocage peuvent être des piques 40a, en métal par exemple et agencées pour se planter dans les aliments pour les bloquer. Bien entendu, le poussoir 40 est lui aussi arrêté en rotation dans la goulotte d'alimentation 30a (par exemple avec un index qui coulisse dans une rainure, ou avec une section non circulaire...).

Le deuxième axe de rotation 11 de l'outil de coupe 10 est donc incliné par rapport au premier axe de rotation 1 de l'entraîneur 20. On peut envisager que le deuxième axe de rotation 11 de l'outil de coupe 10 ne soit pas coplanaire avec le premier axe de rotation 1 de l'entraîneur 20, mais par contre, la projection du deuxième axe de rotation 11 (de l'outil de coupe 10) dans un plan parallèle à ce dernier et contenant le premier axe de rotation 1 de l'entraîneur 20 est inclinée par rapport au premier axe de rotation 1 de l'entraîneur 20.

Cependant, dans une mise en oeuvre préférée, l'interface périphérique 10a et la portion d'entraîneur 20a sont des pignons à axes concourants ou des pignons coniques. Autrement dit, dans cette mise en oeuvre préférée, le premier axe de rotation 1 et le deuxième axe de rotation 11 sont coplanaires.

Pour maintenir en place l'outil de coupe 10 dans l'espace de travail 32 malgré l'effort vertical de poussée exercé par les aliments à découper, il est prévu une ou plusieurs butées.

Ainsi, le dispositif de préparation culinaire 100 comprend une bague 16 amovible qui s'attache sur la sortie du conduit d'éjection 30b, et la bague 16 amovible présente au moins une portion de couronne 16a qui est agencée pour guider l'outil de coupe 10 et pour servir de butée d'appui à l'outil de coupe 10 selon la direction du deuxième axe de rotation 11. L'outil de coupe 10 est ainsi porté à la fois par la bague 16 et par la portion d'entraîneur 20a. On peut envisager également de prévoir au moins une et préférentiellement deux excroissances dans le conduit d'éjection 30b lui-même pour guider en rotation l'outil de coupe 10 et lui servir de butée axiale (selon le deuxième axe de rotation 11).

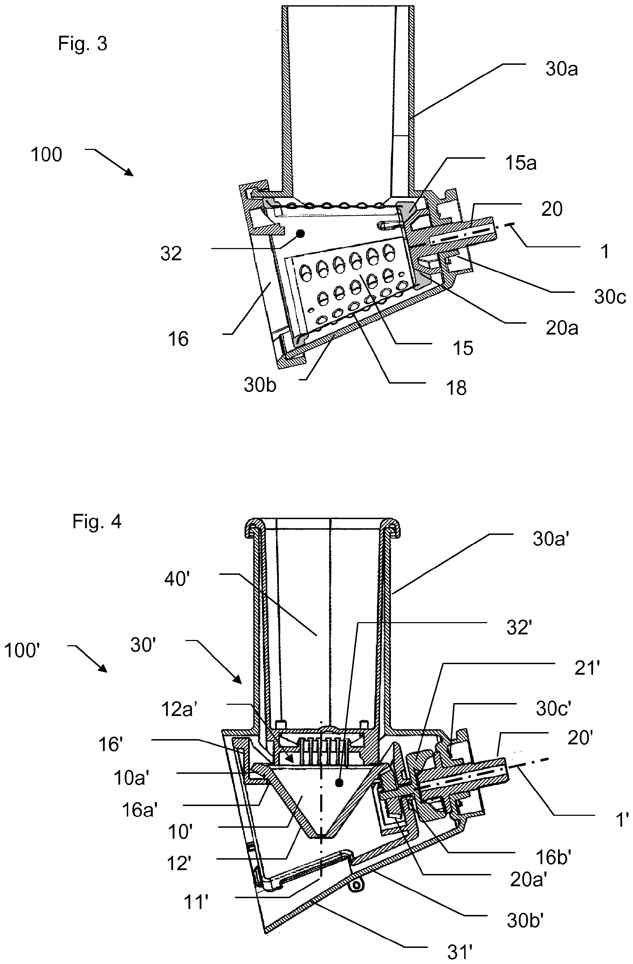

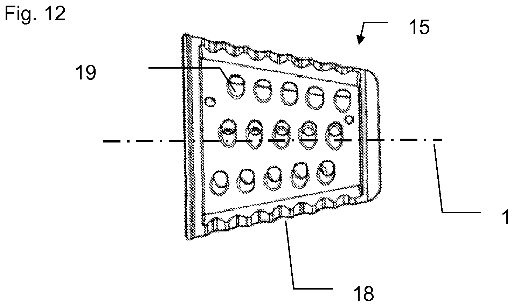

La figure 3 représente la vue partielle du dispositif de préparation culinaire 100 de la figure 2, recevant un autre outil de coupe 15, tronconique et amovible par rapport au corps 30. Contrairement à l'outil de coupe 10 en spirale qui est reçu par le dispositif de préparation culinaire 100 de sorte à recevoir les aliments dans le cône formé par la paroi d'appui 12 (c'est-à-dire dans l'exemple préféré selon une direction sensiblement parallèle à l'axe de rotation de l'outil de coupe 10), l'autre outil de coupe 15 présente une paroi latérale 18 tronconique et est reçu par le dispositif de préparation culinaire 100 de sorte à recevoir les aliments selon une direction normale ou quasi normale à la paroi latérale 18. En d'autres termes, l'autre outil de coupe 15 est reçu par le corps 30 de sorte à ce que la goulotte d'alimentation 30a débouche sur la paroi latérale 18 portant au moins un organe de coupe externe. Ainsi, l'autre outil de coupe 15 peut servir à râper, découper en rondelles ou en tranches les aliments à préparer. La portion d'entraîneur 20a est agencée pour s'accoupler avec l'autre outil de coupe 15 et l'entraîner en rotation à une vitesse de rotation identique à la vitesse de rotation de l'entraîneur 20. Une description détaillée d'un exemple de l'autre outil de coupe 15 est donnée à la figure 12.

L'autre outil de coupe 15 est accouplé avec l'entraîneur 20 pour être entraîné en rotation autour du premier axe de rotation 1 de l'entraîneur 20. Autrement dit, l'autre outil de coupe 15 est engagé avec l'entraîneur 20 pour avoir le même mouvement de rotation que l'entraîneur 20, et l'autre outil de coupe 15 comprend donc une interface d'accouplement 15a qui est la forme complémentaire de la portion d'entraîneur 20a. Il faut bien noter qu'il n'y a pas de mouvement relatif ni d'engrènement entre l'entraîneur 20 et l'autre outil de coupe 15.

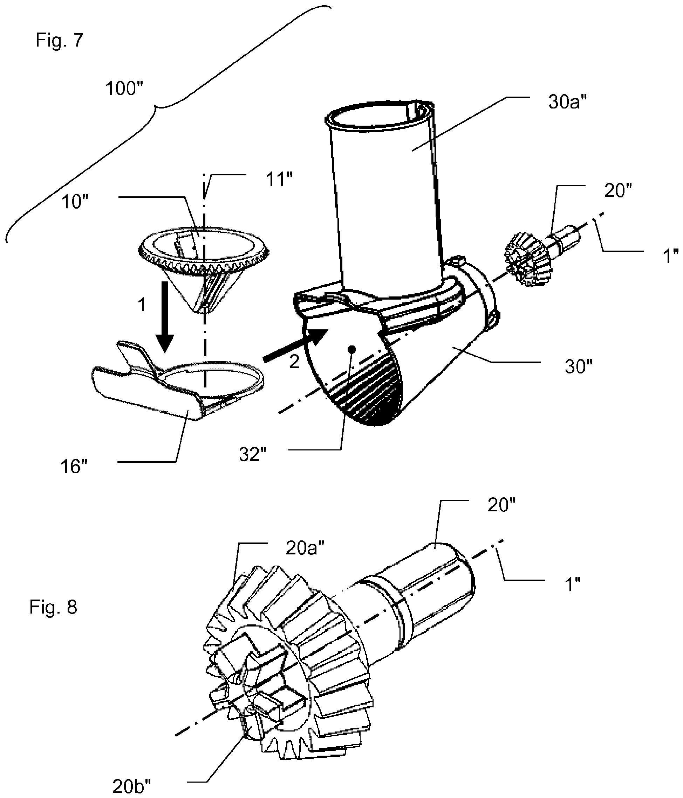

On peut toujours envisager de maintenir l'autre outil de coupe 15 dans l'espace de travail avec la bague 16 amovible, mais on pourrait envisager d'autres modes de maintien, comme un clipsage ou un accouplement par baïonnette avec l'entraîneur 20 par exemple, comme par exemple avec l'entraîneur 20" illustré sur la figure 8.

Lors de l'utilisation du dispositif de préparation culinaire 100 avec l'autre outil de coupe 15, les aliments sont toujours introduits par la goulotte d'alimentation 30a et poussés avec le poussoir 40 (non représenté sur cette figure), pour être découpés dans l'espace de travail 32 et éjectés par le conduit d'éjection 30b.

La figure 4 représente un deuxième mode de réalisation d'un dispositif de préparation culinaire 100' de l'invention, dans lequel le dispositif de préparation culinaire 100' comprend un support 16' amovible agencé dans l'espace de travail 32' d'un corps 30'. Le support 16' amovible comprend lui-même un palier 16b' agencé pour recevoir un élément de transmission 21', et une portion de couronne 16a' formant une butée pour recevoir l'outil de coupe 10' en spirale. L'outil de coupe 10' en spirale est conique avec la paroi d'appui 12' conique qui comprend toujours une lame de coupe (non visible ici), et une ouverture d'alimentation 12a' pour recevoir les aliments à préparer et poussés par un poussoir 40'. La partie inférieure du poussoir 40' est également équipée de piques 40a' formant des moyens de blocage agencés pour bloquer en rotation les aliments dans la goulotte d'alimentation 30a. L'élément de transmission 21' est agencé pour s'engager avec un entraîneur 20' monté en pivot dans un palier 30c' du corps 30'. Ainsi l'outil de coupe 10' est porté d'une part par le support 16' et d'autre part par une portion d'entraîneur 20a' formée sur l'élément de transmission 21'.

Comme pour le premier mode de réalisation, l'outil de coupe 10' et l'élément de transmission 21' sont engagés ensemble pour que l'outil de coupe 10' soit entraîné en rotation autour d'un deuxième axe de rotation 11' incliné par rapport au premier axe de rotation 1' de l'entraîneur 20'. A cet effet, il est prévu une interface de type pignon conique entre ces deux pièces (interface périphérique 10a' sur l'outil de coupe 10' et pignon conique formant la portion d'entraîneur 20a' sur l'élément de transmission 21').

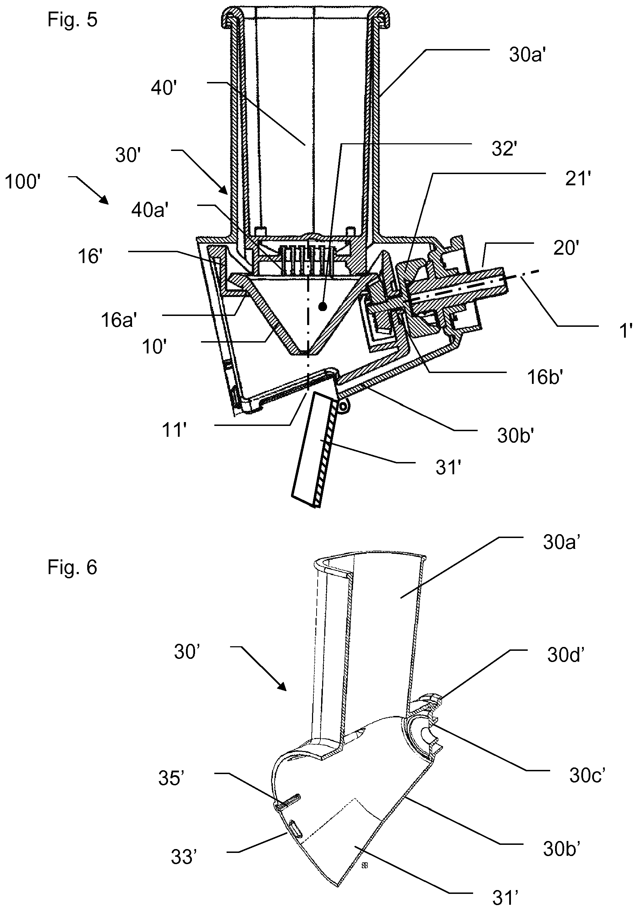

Le corps 30' comprend toujours une goulotte d'alimentation 30a' et un conduit d'éjection 30b', mais comprend en plus un volet 31', mobile entre une position fermée telle que représentée ici pour la compréhension, et une position ouverte telle que visible sur la figure 5, pour laisser tomber directement dans un réceptacle les aliments découpés par l'outil de coupe 10'. Lorsque le corps 30' reçoit l'autre outil de coupe 15, le volet 31' est alors positionné en position fermée, c'est-à-dire qu'il entoure la paroi latérale de l'autre outil de coupe pour assurer une protection optimale à l'utilisateur. On peut prévoir un détrompeur sur l'autre outil de coupe 15, pour forcer le volet 31' à être en position fermée lorsque c'est l'autre outil de coupe 15 qui est utilisé.

Tel que bien visible sur les figures 4 et 5, la goulotte d'alimentation 30a' s'étend autour du deuxième axe de rotation 11' lorsque l'outil de coupe 10' en spirale est en place dans le corps 30'.

La figure 6 représente une coupe du corps 30' en vue isométrique. Le corps 30' est montable de manière amovible sur la base motorisée 210 par le biais d'une interface de type quart de tour 30d' par exemple.

Le corps 30' comprend donc la goulotte d'alimentation 30a' qui est ici de section non circulaire pour fournir un blocage en rotation du poussoir 40' et donc des aliments lorsque l'utilisateur procède à une découpe de type taille crayon avec l'outil de coupe 10'. Le corps 30' comprend également le conduit d'éjection 30b' avec en option comme ici un volet 31' mobile en rotation. Le corps 30' comprend également des encoches 35' pour procurer un blocage en rotation du support 16' amovible visible sur les figures 4 et 5, et il comprend enfin des ergots 33' pour retenir le support 16' amovible engagé dans le corps 30'.

La figure 7 représente un troisième mode de réalisation d'un dispositif de préparation culinaire 100" selon l'invention. Un outil de coupe 10" en spirale peut être reçu (flèche 1) par un tiroir 16" amovible lui-même ensuite reçu par un corps 30" (flèche 2) dans un espace de travail 32". Le corps 30" comprend un entraîneur 20" mobile en rotation autour d'un premier axe 1", afin d'entraîner l'outil de coupe 10" selon un deuxième axe de rotation 11", incliné par rapport au premier axe de rotation 1". Ainsi la goulotte d'alimentation 30a" s'étend autour du deuxième axe de rotation 11" lorsque l'outil de coupe 10" en spirale est en place dans le corps 30".

La figure 8 représente en détail l'entraîneur 20" de la figure 7. On retrouve la portion d'entraîneur 20a" qui est un pignon conique pour entraîner en rotation l'outil de coupe 10" autour du deuxième axe de rotation 11" incliné par rapport à celui de l'entraîneur 20". Par contre, l'entraîneur 20" comporte une interface centrale 20b" agencée pour s'accoupler avec ledit au moins un autre outil de coupe 15 et l'entraîner en rotation autour du premier axe de rotation 1" à une vitesse de rotation identique à la vitesse de rotation de l'entraîneur 20". L'interface centrale 20b" est entourée par la portion d'entraîneur 20a". Ainsi le même entraîneur 20" peut entraîner l'outil de coupe 10" ou l'autre outil de coupe 15.

La figure 9 représente en détail l'outil de coupe 10" en spirale du troisième mode de réalisation. Il est à noter que cet outil de coupe 10" peut tout à fait être l'outil de coupe 10 ou 10' respectivement du premier ou deuxième mode de réalisation.

L'outil de coupe 10" est donc conique et présente une ouverture d'alimentation 12a" pour recevoir les aliments à découper alimentés par la goulotte d'alimentation 30a". L'outil de coupe 10" présente donc une paroi d'appui 12" conique, inclinée par rapport au deuxième axe de rotation 11". Deux lames de coupe 13" sont disposées sur la paroi d'appui 12". Les deux lames de coupe 13" s'étendent sur la hauteur la paroi d'appui 12". Chacune des deux lames de coupe 13" est suivie d'un passage adjacent 14" pour laisser passer la bande d'aliment découpée. On retrouve en périphérie de l'outil de coupe 10" une interface périphérique 10a" qui est une couronne dentée conique, pour s'engrener avec le pignon conique formant la portion d'entraîneur 20a" de l'entraîneur 20".

La figure 10 représente en détail le tiroir 16" amovible de la figure 7. Le tiroir 16" comprend une couronne 16a" pour guider l'outil de coupe 10" en rotation et former aussi une butée mécanique selon la direction du deuxième axe de rotation 11". Le tiroir 16" porte ainsi l'outil de coupe 10". Le tiroir 16" comprend aussi une languette de retenue 16b" pour accrocher le tiroir 16" avec le corps 30".

La figure 11 représente en détail le corps 30" de la figure 7. Le corps 30" comprend donc la goulotte d'alimentation 30a" pour guider les aliments à préparer vers l'espace de travail 32". Une fois coupés, les aliments ressortent par le conduit d'éjection 30b". Pour recevoir le tiroir 16", le corps 30" comprend deux excroissances 34" qui forment un plat d'appui et un guidage latéral pour le tiroir 16".

La figure 12 représente un exemple de réalisation pour l'autre outil de coupe 15, qui est de forme générale tronconique et peut être reçu aussi bien par le corps 30, 30' ou 30", respectivement du premier, deuxième et troisième mode de réalisation de l'invention. Ainsi le corps 30 ; 30' ; 30" est agencé pour recevoir dans l'espace de travail 32 ; 32' ; 32" et de manière amovible au moins un autre outil de coupe 15 à la place dudit au moins un outil de coupe 10 ; 10' ; 10", l'entraîneur 20 ; 20' ; 20" étant agencé pour s'engager avec ledit au moins un autre outil de coupe 15 afin de l'entrainer en rotation selon le premier axe de rotation 1 ; 1' ; 1". La paroi latérale 18 comprend ici plusieurs interfaces de coupe 19 disposées en quinconce sur la paroi latérale 18 afin de râper les aliments à préparer. En alternative, on peut prévoir que ces interfaces de coupe soient au moins une lame agencée sur toute la longueur de la paroi latérale 18 dans le sens du premier axe de rotation 1 pour découper alors les aliments en tranches ou en rondelles.

D'une manière générale, on peut prévoir dans l'espace de travail 32, 32', 32" une ou plusieurs lames pour préfendre les aliments à préparer, avant d'être travaillés par l'outil de coupe 10, 10', 10" ou par l'autre outil de coupe 15, afin d'obtenir des filaments ou des morceaux, et/ou pour refendre les aliments après les avoir travaillés.

A titre de variante, ledit au moins un outil de coupe 10, 10', 10" en spirale ne comporte pas nécessairement une paroi d'appui 12 ; 12' , 12" conique. Ledit au moins un outil de coupe 10, 10', 10" en spirale peut notamment comporter une paroi d'appui 12 ; 12' , 12" plane ou formant une portion d'hélicoïde, et ménageant au moins un passage 14 ; 14" adjacent à ladite au moins une lame de coupe 13 ; 13".

A titre de variante, ledit au moins un autre outil de coupe 15 ne comprend pas nécessairement une paroi latérale 18 tronconique. Si désiré le ledit au moins un autre outil de coupe peut comprendre une paroi latérale cylindrique.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Dispositif de préparation culinaire (100; 100' ; 100") comprenant :
- un entraîneur (20 ; 20' ; 20") mobile en rotation autour d'un premier axe de rotation (1 ; 1' ; 1"),
- au moins un outil de coupe (10 ; 10' ; 10") en spirale, comprenant une paroi d'appui (12 ; 12' ; 12") s'étendant autour d'un deuxième axe de rotation (11 ; 11'; 11"), au moins une lame de coupe (13; 13") s'étendant jusqu'au deuxième axe de rotation (11; 11'; 11"), avec un passage (14; 14") adjacent à ladite au moins une lame de coupe (13 ; 13"),
- un corps (30 ; 30' ; 30") agencé pour recevoir ledit au moins un outil de coupe (10 ; 10' ; 10") de manière amovible dans un espace de travail (32 ; 32' ; 32") ménagé dans ledit corps (30 ; 30' ; 30"),
- au moins une portion d'entraîneur (20a ; 20a' ; 20a") entraînée par l'entraîneur (20 ; 20' ; 20") et agencée pour s'engrener avec ledit au moins un outil de coupe (10 ; 10' ; 10"), afin d'entraîner en rotation ledit au moins un outil de coupe (10 ; 10' ; 10") selon le deuxième axe de rotation (11 ; 11' ; 11"),
**caractérisé en ce que** le deuxième axe de rotation (11 ; 11' ; 11") est incliné par rapport au premier axe de rotation (1 ; 1' ; 1").

2. Dispositif de préparation culinaire (100; 100' ; 100") selon la revendication 1, **caractérisé en ce que** le corps (30 ; 30' ; 30") comprend une goulotte d'alimentation (30a ; 30a' ; 30a") agencée pour recevoir les aliments à préparer et les guider vers l'espace de travail (32 ; 32' ; 32"), et **en ce que** la goulotte d'alimentation (30a ; 30a' ; 30a") s'étend autour du deuxième axe de rotation (11 ; 11' ; 11") lorsque l'outil de coupe (10 ; 10' ; 10") en spirale est en place dans le corps (30 ; 30' ; 30").

3. Dispositif de préparation culinaire (100 ; 100' ; 100") selon l'une des revendications 1 ou 2, **caractérisé en ce que** ledit au moins un outil de coupe (10 ; 10' ; 10") en spirale comprend une paroi d'appui (12 ; 12' ; 12") s'étendant autour du deuxième axe de rotation (11 ; 11' ; 11") et comporte au moins une lame de coupe (13 ; 13") s'étendant jusqu'au deuxième axe de rotation (11 ; 11' ; 11"), avec un passage (14 ; 14") adjacent à ladite au moins une lame de coupe (13 ; 13"), ledit passage (14 ; 14") s'étendant jusqu'au deuxième axe de rotation (11 ; 11' ; 11"), pour permettre l'évacuation des spirales d'aliments découpés.

4. Dispositif de préparation culinaire (100 ; 100' ; 100") selon la revendication 3, **caractérisé en ce que** la paroi d'appui (12 ; 12' ; 12") est conique et **en ce que** ladite au moins une lame de coupe (13 ; 13") s'étend à l'intérieur de la paroi d'appui (12 ; 12' ; 12") conique.

5. Dispositif de préparation culinaire (100 ; 100' ; 100") selon l'une des revendications 3 ou 4, **caractérisé en ce que** le corps (30 ; 30' ; 30") comprend une goulotte d'alimentation (30a ; 30a' ; 30a") agencée pour recevoir des aliments à préparer et les guider vers l'espace de travail (32 ; 32' ; 32"), le dispositif de préparation culinaire étant agencé pour recevoir ledit au moins un outil de coupe (10 ; 10' ; 10") dans l'espace de travail (32 ; 32' ; 32") avec la goulotte d'alimentation (30a ; 30a' ; 30a") débouchant en regard de la paroi d'appui (12 ; 12' ; 12").

6. Dispositif de préparation culinaire (100; 100' ; 100") selon la revendication 5, **caractérisé en ce qu'**il comprend un poussoir (40 ; 40') agencé pour s'insérer dans la goulotte d'alimentation (30a ; 30a' ; 30a") et pousser ainsi les aliments à préparer vers l'espace de travail (32 ; 32' ; 32"), le poussoir (40 ; 40') comprenant des moyens de blocage agencés pour bloquer en rotation les aliments dans la goulotte d'alimentation (30a ; 30a' ; 30a").

7. Dispositif de préparation culinaire (100; 100' ; 100") selon la revendication 6, **caractérisé en ce que** les moyens de blocage sont des piques (40a ; 40a').

8. Dispositif de préparation culinaire (100 ; 100' ; 100") selon l'une des revendications 1 à 7, **caractérisé en ce que** le corps (30 ; 30' ; 30") est agencé pour recevoir dans l'espace de travail (32 ; 32' ; 32") et de manière amovible au moins un autre outil de coupe (15) à la place dudit au moins un outil de coupe (10 ; 10' ; 10"), l'entraîneur (20 ; 20' ; 20") étant agencé pour s'engager avec ledit au moins un autre outil de coupe (15) afin de l'entrainer en rotation selon le premier axe de rotation (1 ; 1' ; 1").

9. Dispositif de préparation culinaire (100) selon la revendication 8, **caractérisé en ce que** ladite au moins une portion d'entraîneur (20a) est agencée pour s'accoupler avec ledit au moins un autre outil de coupe (15) et l'entraîner en rotation à une vitesse de rotation identique à la vitesse de rotation de l'entraîneur (20).

10. Dispositif de préparation culinaire (100") selon la revendication 8, **caractérisé en ce que** l'entraîneur (20") comporte une interface centrale (20b") agencée pour s'accoupler avec ledit au moins un autre outil de coupe (15) et l'entraîner en rotation autour du premier axe de rotation (1") à une vitesse de rotation identique à la vitesse de rotation de l'entraîneur (20").

11. Dispositif de préparation culinaire (100 ; 100' ; 100") selon l'une des revendications 8 à 10 dans leur dépendance à l'une des revendications 5 à 7, **caractérisé en ce que** ledit au moins un autre outil de coupe (15) comprend une paroi latérale (18) tronconique ou cylindrique avec au moins une interface de coupe (19), le corps (30; 30' ; 30") étant agencé pour recevoir ledit au moins un autre outil de coupe (15) dans l'espace de travail (32 ; 32' ; 32") avec la goulotte d'alimentation (30a ; 30a' ; 30a") débouchant en regard de la paroi latérale (18) tronconique ou cylindrique.

12. Dispositif de préparation culinaire (100') selon l'une des revendications 8 à 11, **caractérisé en ce que** le corps (30') comprend un volet (31') agencé pour pivoter entre :
- une position fermée dans laquelle le volet (31') recouvre au moins une portion de la paroi latérale (18) tronconique ou cylindrique dudit au moins un autre outil de coupe (15),
- une position ouverte, dans laquelle le volet (31') est agencé pour permettre à des aliments coupés par ledit au moins un outil de coupe (10') de tomber directement dans un réceptacle.

13. Dispositif de préparation culinaire (100 ; 100' ; 100") selon l'une des revendications 1 à 12, **caractérisé en ce que** ladite au moins une portion d'entraîneur (20a ; 20a' ; 20a") est de type pignon conique pour coopérer avec une interface périphérique (10a ; 10a' ; 10a") dudit au moins un outil de coupe (10; 10' ; 10").

14. Dispositif de préparation culinaire (100 ; 100' ; 100") selon l'une des revendications 1 à 13, **caractérisé en ce qu'**il comprend des moyens de retenue dudit au moins un outil de coupe (10 ; 10' ; 10") entraîné par ladite au moins une portion d'entraîneur (20a ; 20a' ; 20a").

15. Dispositif de préparation culinaire (100; 100' ; 100") selon la revendication 14, **caractérisé en ce que** les moyens de retenue comprennent au moins une portion de couronne (16a, 16a', 16a") formant une butée pour recevoir ledit au moins un outil de coupe (10 ; 10' ; 10") entraîné par ladite au moins une portion d'entraîneur (20a ; 20a' ; 20a").

16. Dispositif de préparation culinaire (100) selon l'une des revendications 14 ou 15, **caractérisé en ce que** les moyens de retenue comprennent une bague (16) amovible par rapport au corps (30) et agencée pour former au moins une butée mécanique audit au moins un outil de coupe (10) pour le retenir selon la direction du deuxième axe de rotation (11).

17. Dispositif de préparation culinaire (100') selon l'une des revendications 14 ou 15, **caractérisé en ce que** les moyens de retenue comprennent un support (16') amovible par rapport au corps (30') et agencé pour former au moins une butée mécanique audit au moins un outil de coupe (10') pour le retenir selon la direction du deuxième axe de rotation (11').

18. Dispositif de préparation culinaire (100') selon la revendication 17, **caractérisé en ce que** le support (16') amovible comprend un palier (16b') et reçoit ladite au moins une portion d'entraîneur (20a') montée en pivot dans le palier (16b').

19. Dispositif de préparation culinaire (100") selon l'une des revendications 14 ou 15, **caractérisé en ce que** les moyens de retenue comprennent un tiroir (16") amovible par rapport au corps (30") et agencé pour former au moins une butée mécanique audit au moins un outil de coupe (10") pour le retenir selon la direction du deuxième axe de rotation (11").

20. Dispositif de préparation culinaire (100 ; 100' ; 100") selon l'une des revendications 1 à 19, **caractérisé en ce que** ledit au moins un outil de coupe (10 ; 10' ; 10") en spirale est reçu de manière amovible par le dispositif de préparation culinaire pour découper les aliments en longs rubans.

21. Dispositif de préparation culinaire (100 ; 100' ; 100") selon l'une des revendications 1 à 20, **caractérisé en ce que** le corps (30 ; 30' ; 30") est agencé pour s'accoupler de manière amovible à une base motorisée (210),
le corps (30 ; 30' ; 30") comprenant :
- un palier (30c ; 30c'),
- l'entraîneur (20 ; 20' ; 20") monté en pivot dans le palier (30c ; 30c'), l'entraîneur (20 ; 20' ; 20") étant agencé pour s'accoupler avec une sortie d'entraînement de la base motorisée (210).

22. Appareil de préparation culinaire (200) comprenant une base motorisée (210) et un accessoire de travail (220) solidaire de la base motorisée (210), **caractérisé en ce que** l'accessoire de travail (220) forme un dispositif de préparation culinaire (100; 100' ; 100") selon la revendication 21.

## Patentansprüche

1. Vorrichtung zur kulinarischen Zubereitung (100; 100'; 100"), umfassend:
- einen Mitnehmer (20; 20', 20"), der um eine erste Drehachse (1; 1'; 1") drehbeweglich ist;
- mindestens ein spiralförmiges Schneidwerkzeug (10; 10'; 10"), das eine Stützwand (12, 12', 12"), die sich um die zweite Drehachse (11; 11'; 11") erstreckt, mindestens eine Schneidklinge (13;13"), die sich bis zu der zweiten Drehachse (11; 11'; 11") erstreckt, mit einem Durchgang (14; 14") neben der mindestens einen Schneidklinge (13;13") umfasst,
- einen Körper (30; 30'; 30"), der angeordnet ist, um mindestens ein Schneidwerkzeug (10; 10'; 10") abnehmbar in einem Arbeitsraum (32; 32'; 32"), der in dem Körper (30; 30'; 30") ausgebildet ist, aufzunehmen,
- mindestens einen Mitnehmerabschnitt (20a; 20a'; 20a"), der von dem Mitnehmer (20; 20'; 20") angetrieben wird und angeordnet ist, in das mindestens eine Schneidwerkzeug (10; 10';10") einzugreifen, um das mindestens eine Schneidwerkzeug (10; 10'; 10") um eine zweite Drehachse (11; 11'; 11") in Drehung zu versetzen,
**dadurch gekennzeichnet, dass** die zweite Drehachse (11; 11'; 11") in Bezug auf die erste Drehachse (1; 1'; 1") geneigt ist.

2. Vorrichtung zur kulinarischen Zubereitung (100; 100'; 100") nach Anspruch 1, **dadurch gekennzeichnet, dass** der Körper (30; 30'; 30") eine Zufuhrrutsche (30a; 30a'; 30a") umfasst, die angeordnet ist, die zuzubereitenden Lebensmittel aufzunehmen und zu dem Arbeitsraum (32; 32'; 32") zu führen, und dass sich die Zufuhrrutsche (30a; 30a'; 30a") um die zweite Drehachse (11; 11'; 11") erstreckt, wenn das spiralförmige Schneidwerkzeug (10; 10'; 10") in dem Körper (30; 30'; 30") platziert ist.

3. Vorrichtung zur kulinarischen Zubereitung (100; 100'; 100") nach einem der Ansprüche 1 oder 2, **dadurch gekennzeichnet, dass** das mindestens eine spiralförmige Schneidwerkzeug (10; 10'; 10") eine Stützwand (12; 12'; 12"), die sich um die zweite Drehachse (11; 11'; 11") erstreckt und mindestens eine Schneidklinge (13; 13") aufweist, die sich bis zu der zweiten Drehachse (11; 11'; 11") erstreckt, mit einem Durchgang (14; 14") neben der mindestens einen Schneidklinge (13; 13") umfasst, wobei sich der Durchgang (14; 14") bis zu der zweiten Drehachse (11; 11'; 11") erstreckt, um die Evakuierung von geschnittenen Lebensmittelspiralen zu ermöglichen.

4. Vorrichtung zur kulinarischen Zubereitung (100; 100'; 100") nach Anspruch 3, **dadurch gekennzeichnet, dass** die Stützwand (12; 12'; 12") konisch ist, und dass sich das mindestens eine Schneidmesser (13; 13") innerhalb der konischen Stützwand (12; 12'; 12") erstreckt.

5. Vorrichtung zur kulinarischen Zubereitung (100; 100'; 100") nach einem der Ansprüche 3 oder 4, **dadurch gekennzeichnet, dass** der Körper (30; 30'; 30") eine Zufuhrrutsche (30a; 30a'; 30a") umfasst, die angeordnet ist, um zuzubereitende Nahrungsmittel aufzunehmen und sie zu dem Arbeitsraum (32; 32'; 32") zu führen, wobei die Vorrichtung zur kulinarischen Zubereitung angeordnet ist, um das mindestens eine Schneidwerkzeug (10; 10'; 10") in dem Arbeitsraum (32; 32'; 32") aufzunehmen, wobei die Zufuhrrutsche (30a; 30a'; 30a") gegenüber der Stützwand (12; 12'; 12") mündet.

6. Vorrichtung zur kulinarischen Zubereitung (100; 100'; 100") nach Anspruch 5, **dadurch gekennzeichnet, dass** sie einen Schieber (40; 40') umfasst, der angeordnet ist, um in die Zufuhrrutsche (30a; 30a'; 30a") eingesetzt zu werden und so die zuzubereitenden Lebensmittel in den Arbeitsraum (32; 32'; 32") zu schieben, wobei der Schieber (40; 40') Blockiermittel umfasst, die angeordnet sind, um die Drehung der Lebensmittel in der Zufuhrrutsche (30a; 30a; 30a") zu blockieren.

7. Vorrichtung zur kulinarischen Zubereitung (100; 100'; 100") nach Anspruch 6, **dadurch gekennzeichnet, dass** die Blockiermittel Spieße (40a; 40a') sind.

8. Vorrichtung zur kulinarischen Zubereitung (100; 100'; 100") nach einem der Ansprüche 1 bis 7, **dadurch gekennzeichnet, dass** der Körper (30; 30'; 30") angeordnet ist, um in dem Arbeitsraum (32; 32'; 32") und abnehmbar mindestens ein anderes Schneidwerkzeug (15) anstelle des mindestens einen Schneidwerkzeugs (10; 10'; 10") aufzunehmen, wobei der Mitnehmer (20; 20'; 20") angeordnet ist, um mit dem mindestens einen anderen Schneidwerkzeug (15) in Eingriff zu kommen, um es um die erste Drehachse (1; 1'; 1") in Drehung anzutreiben.

9. Vorrichtung zur kulinarischen Zubereitung (100) nach Anspruch 8, **dadurch gekennzeichnet, dass** der mindestens eine Mitnehmerabschnitt (20a) so angeordnet ist, um an dem mindestens einen anderen Schneidwerkzeug (15) anzukoppeln und es mit einer Drehzahl, die mit der Drehzahl des Mitnehmers (20) identisch ist, anzutreiben.

10. Vorrichtung zur kulinarischen Zubereitung (100") nach Anspruch 8, **dadurch gekennzeichnet, dass** der Mitnehmer (20") eine zentrale Schnittstelle (20b") aufweist, die angeordnet ist, um an dem mindestens einen anderen Schneidwerkzeug (15) anzukoppeln und es um die erste Drehachse (1") mit einer Drehzahl in Drehung anzutreiben, die mit der Drehzahl des Mitnehmers (20") identisch ist.

11. Vorrichtung zur kulinarischen Zubereitung (100; 100'; 100") nach einem der Ansprüche 8 bis 10 abhängig von einem der Ansprüche 5 bis 7, **dadurch gekennzeichnet, dass** das mindestens eine weitere Schneidwerkzeug (15) eine kegelstumpfförmige oder zylindrische Seitenwand (18) mit mindestens einer Schneidschnittstelle (19) umfasst, wobei der Körper (30; 30'; 30") angeordnet ist, um das mindestens eine andere Schneidwerkzeug (15) in dem Arbeitsraum (32; 32'; 32") aufzunehmen, wobei die Zufuhrrutsche (30a; 30a'; 30a") gegenüber der kegelstumpfförmigen oder zylindrischen Seitenwand (18) mündet.

12. Vorrichtung zur kulinarischen Zubereitung (100') nach einem der Ansprüche 8 bis 11, **dadurch gekennzeichnet, dass** der Körper (30') eine Klappe (31') umfasst, die angeordnet ist, um zu schwenken zwischen:
- einer geschlossenen Position, in der die Klappe (31') mindestens einen Abschnitt der kegelstumpfförmigen oder zylindrischen Seitenwand (18) des mindestens einen anderen Schneidwerkzeugs (15) abdeckt,
- einer geöffneten Position, in der die Klappe (31') angeordnet ist, um es Lebensmitteln zu ermöglichen, die durch das mindestens eine Schneidwerkzeug (10') geschnitten sind, direkt in eine Gefäß zu fallen.

13. Vorrichtung zur kulinarischen Zubereitung (100; 100'; 100") nach einem der Ansprüche 1 bis 12, **dadurch gekennzeichnet, dass** der mindestens eine Mitnehmerabschnitt (20a; 20a'; 20a") vom Kegelradtyp ist, um mit einer peripheren Schnittstelle (10a; 10a'; 10a") des mindestens einen Schneidwerkzeugs (10; 10'; 10") zusammenzuwirken.

14. Vorrichtung zur kulinarischen Zubereitung (100; 100'; 100") nach einem der Ansprüche 1 bis 13, **dadurch gekennzeichnet, dass** sie Mittel zum Rückhalten des mindestens einen Schneidwerkzeugs (10; 10'; 10") umfasst, das von dem mindestens einen Mitnehmerabschnitt (20a; 20a'; 20a") angetrieben wird.

15. Vorrichtung zur kulinarischen Zubereitung (100; 100'; 100") nach Anspruch 14, **dadurch gekennzeichnet, dass** die Mittel zum Rückhalten mindestens einen Kronenabschnitt (16a, 16a', 16a") umfassen, der einen Anschlag zum Aufnehmen des mindestens einen Schneidwerkzeugs (10; 10'; 10") bildet, das von dem mindestens einen Mitnehmerabschnitt (20a; 20a'; 20a") angetrieben wird.

16. Vorrichtung zur kulinarischen Zubereitung (100) nach einem der Ansprüche 14 oder 15, **dadurch gekennzeichnet, dass** die Mittel zum Rückhalten einen Ring (16) umfassen, der von dem Körper (30) abnehmbar und so angeordnet ist, dass er mindestens einen mechanischen Anschlag an dem mindestens einen Schneidwerkzeug (10) bildet um es in Richtung der zweiten Drehachse (11) zurückzuhalten.

17. Vorrichtung zur kulinarischen Zubereitung (100') nach einem der Ansprüche 14 oder 15, **dadurch gekennzeichnet, dass** die Mittel zum Rückhalten einen Träger (16') umfassen, der von dem Körper (30') abnehmbar und so angeordnet ist, dass er mindestens einen mechanischen Anschlag an dem mindestens einen Schneidwerkzeug (10') bildet, um es in Richtung der zweiten Drehachse (11') zurückzuhalten.

18. Vorrichtung zur kulinarischen Zubereitung (100') nach Anspruch 17, **dadurch gekennzeichnet, dass** der abnehmbare Träger (16') ein Lager (16b') umfasst und den mindestens einen Mitnehmerabschnitt (20a') aufnimmt, der schwenkbar in dem Lager (16b') angebracht ist.

19. Vorrichtung zur kulinarischen Zubereitung (100") nach einem der Ansprüche 14 oder 15, **dadurch gekennzeichnet, dass** die Mittel zum Rückhalten einen Einschub (16") umfassen, der von dem Körper (30") abnehmbar und so angeordnet ist, dass er mindestens einen mechanischen Anschlag an dem mindestens einen Schneidwerkzeug (10") bildet, um es in Richtung der zweiten Drehachse (11") zurückzuhalten.

20. Vorrichtung zur kulinarischen Zubereitung (100; 100'; 100") nach einem der Ansprüche 1 bis 19, **dadurch gekennzeichnet, dass** das mindestens eine spiralförmige Schneidwerkzeug (10; 10'; 10") abnehmbar durch die Vorrichtung zur kulinarischen Zubereitung aufgenommen ist, um Lebensmittel in lange Bänder zu schneiden.

21. Vorrichtung zur kulinarischen Zubereitung (100; 100'; 100") nach einem der Ansprüche 1 bis 20, **dadurch gekennzeichnet, dass** der Körper (30; 30'; 30") zum abnehmbaren Ankoppeln an eine Motorbasis (210) angeordnet ist, wobei der Körper (30; 30'; 30") umfasst:
- ein Lager (30c; 30c');
- den Mitnehmer (20; 20'; 20"), der schwenkbar in dem Lager (30c; 30c') angebracht ist, wobei der Mitnehmer (20; 20'; 20") angeordnet ist, um an einem Antriebsausgang der Motorbasis (210) anzukoppeln.

22. Gerät zur kulinarischen Zubereitung (200), umfassend eine Motorbasis (210) und ein Arbeitszubehör (220), das fest mit der Motorbasis (210) verbunden ist, **dadurch gekennzeichnet, dass** das Arbeitszubehör (220) eine Vorrichtung zur kulinarischen Zubereitung (100; 100'; 100") nach Anspruch 21 bildet.

## Claims

1. Food preparation device (100; 100'; 100") comprising:
- a driver (20; 20'; 20") mobile in rotation about a first rotation axis (1; 1'; 1"),
- at least one spiral cutting tool (10; 10'; 10"), comprising a supporting wall (12; 12'; 12") extending about a second rotation axis (11; 11'; 11"), at least one cutting blade (13; 13") extending to the second rotation axis (11; 11'; 11"), with a passage (14; 14") adjacent to said at least one cutting blade (13; 13"),
- a body (30; 30'; 30") arranged to receive said at least one cutting tool (10; 10'; 10") so that it can be moved in a working space (32; 32'; 32") arranged in said body (30; 30'; 30"),
- at least one driver portion (20a; 20a'; 20a") driven by the driver (20; 20'; 20") and arranged to mesh with said at least one cutting tool (10; 10'; 10"), in order to drive in rotation said at least one cutting tool (10; 10'; 10") about the second rotation axis (11; 11'; 11"),
**characterised in that** the second rotation axis (11; 11'; 11") is inclined with respect to the first rotation axis (1; 1'; 1").

2. Food preparation device (100; 100'; 100") according to claim 1, **characterised in that** the body (30; 30'; 30") comprises a feeding channel (30a; 30a'; 30a") arranged to receive food to be prepared and guide them towards the working space (32; 32'; 32"), and **in that** the feeding channel (30a; 30a'; 30a") extends about the second rotation axis (11; 11'; 11") when the spiral cutting tool (10; 10'; 10") is in place in the body (30; 30'; 30").

3. Food preparation device (100; 100'; 100") according to one of claims 1 or 2, **characterised in that** said at least one spiral cutting tool (10; 10'; 10") comprises a supporting wall (12; 12'; 12") extending about the second rotation axis (11; 11'; 11") and comprises at least one cutting blade (13; 13") extending to the second rotation axis (11; 11'; 11"), with a passage (14; 14") adjacent to said at least one cutting blade (13; 13"), said passage (14; 14") extending to the second rotation axis (11; 11'; 11"), to make it possible to evacuate cut food spirals.

4. Food preparation device (100; 100'; 100") according to claim 3, **characterised in that** the supporting wall (12; 12'; 12") is conical and **in that** said at least one cutting blade (13; 13") extends inside the conical supporting wall (12; 12'; 12").

5. Food preparation device (100; 100'; 100") according to one of claims 3 or 4, **characterised in that** the body (30; 30'; 30") comprises a feeding channel (30a; 30a'; 30a") arranged to receive food to be prepared and guide them towards the working space (32; 32'; 32"), the food preparation device being arranged to receive said at least one cutting tool (10; 10'; 10") in the working space (32; 32'; 32") with the feeding channel (30a; 30a'; 30a") opening into opposite the supporting wall (12; 12'; 12").

6. Food preparation device (100; 100'; 100") according to claim 5, **characterised in that** it comprises a pushbutton (40; 40') arranged to be inserted in the feeding channel (30a; 30a'; 30a") and thus push the food to be prepared towards the working space (32; 32'; 32"), the pushbutton (40; 40') comprising blocking means arranged to block in rotation the food in the feeding channel (30a; 30a'; 30a").

7. Food preparation device (100; 100'; 100") according to claim 6, **characterised in that** the blocking means are endpins (40a; 40a').

8. Food preparation device (100; 100'; 100") according to one of claims 1 to 7, **characterised in that** the body (30; 30'; 30") is arranged to receive, in the working space (32; 32'; 32") and such that at least one other cutting tool (15) can be moved instead of said at least one cutting tool (10; 10'; 10"), the driver (20; 20'; 20") being arranged to be engaged with said at least one other cutting tool (15) in order to drive it in rotation about the first rotation axis (1; 1'; 1").

9. Food preparation device (100) according to claim 8, **characterised in that** said at least one driver portion (20a) is arranged to be coupled with said at least one other cutting tool (15) and drive it in rotation at a rotation speed identical to the rotation speed of the driver (20).

10. Food preparation device (100") according to claim 8, **characterised in that** the driver (20") comprises a central interface (20b") arranged to be coupled with said at least one other cutting tool (15) and drive it in rotation about the first rotation axis (1") at a rotation speed identical to the rotation speed of the driver (20").

11. Food preparation device (100; 100'; 100") according to one of claims 8 to 10 depending on one of claims 5 to 7, **characterised in that** said at least one other cutting tool (15) comprises a truncated or cylindrical side wall (18) with at least one cutting interface (19), the body (30; 30'; 30") being arranged to receive said at least one other cutting tool (15) in the working space (32; 32'; 32") with the feeding channel (30a; 30a'; 30a") opening into opposite the truncated or cylindrical side wall (18).

12. Food preparation device (100') according to one of claims 8 to 11, **characterised in that** the body (30') comprises a flap (31') arranged to pivot between:
- a closed position wherein the flap (31') covers at least one portion of the truncated or cylindrical side wall (18) of said at least one other cutting tool (15),
- an open position, wherein the flap (31') is arranged to make it possible for food cut by said at least one cutting tool (10') to fall directly into a container.

13. Food preparation device (100; 100'; 100") according to one of claims 1 to 12, **characterised in that** said at least one driver portion (20a; 20a'; 20a") is of conical pinion type to engage with a peripheral interface (10a; 10a'; 10a") of said at least one cutting tool (10; 10'; 10").

14. Food preparation device (100; 100'; 100") according to one of claims 1 to 13, **characterised in that** it comprises means for retaining said at least one cutting tool (10; 10'; 10") driven by said at least one driver portion (20a; 20a'; 20a").

15. Food preparation device (100; 100'; 100") according to claim 14, **characterised in that** the retaining means comprise at least one crown portion (16a, 16a', 16a") forming an abutment to receive said at least one cutting tool (10; 10'; 10") driven by said at least one driver portion (20a; 20a'; 20a").

16. Food preparation device (100) according to one of claims 14 or 15, **characterised in that** the retaining means comprise a ring (16) that can be moved with respect to the body (30) and arranged to form at least one mechanical abutment to said at least one cutting tool (10) to retain it along the direction of the second rotation axis (11).

17. Food preparation device (100') according to one of claims 14 or 15, **characterised in that** the retaining means comprise a support (16') that can be moved with respect to the body (30') and arranged to form at least one mechanical abutment to said at least one cutting tool (10') to retain it along the direction of the second rotation axis (11').

18. Food preparation device (100') according to claim 17, **characterised in that** the movable support (16') comprises a bearing (16b') and receives said at least one driver portion (20a') mounted pivoting in the bearing (16b').

19. Food preparation device (100') according to one of claims 14 or 15, **characterised in that** the retaining means comprise a compartment (16") that can be moved with respect to the body (30") and arranged to form at least one mechanical abutment to said at least one cutting tool (10") to retain it along the direction of the second rotation axis (11").

20. Food preparation device (100; 100'; 100") according to one of claims 1 to 19, **characterised in that** said at least one spiral cutting tool (10; 10'; 10") is received so that it can be moved by the food preparation device to cut food into long strips.

21. Food preparation device (100; 100'; 100") according to one of claims 1 to 20, **characterised in that** the body (30; 30'; 30") is arranged to be coupled so that it can be moved to a motorised base (210), the body (30; 30'; 30") comprising:
- a bearing (30c; 30c'),
- the driver (20; 20'; 20") mounted pivoting in the bearing (30c; 30c'), the driver (20; 20'; 20") being arranged to be coupled with a drive output of the motorised base (210).

22. Food preparation appliance (200) comprising a motorised base (210) and a working accessory (220) secured to the motorised base (210), **characterised in that** the working accessory (220) forms a food preparation device (100; 100'; 100") according to claim 21.
